# EUROPEAN PATENT SPECIFICATION

(11) **EP 3 760 487 B1**
(45) Date of publication and mention of the grant of the patent: **30.06.2021**
(21) Application number: 19187036.9
(22) Date of filing: 18.07.2019
(51) Int. Cl.: B60R 9/10

(54) **STRAP FRAME HOLDER**
BANDRAHMENHALTER
SUPPORT DE CADRE À SANGLE

(30) Priority: 01.07.2019 CN 201910584005
(43) Date of publication of application: 06.01.2021
(73) Proprietor: Carman Enterprise Co., Ltd., Yuhang District Hangzhou Zhejiang 311121 (CN)
(72) Inventor: Xianwei, Li, 311121 Hangzhou (CN)
(74) Representative: Paul & Albrecht Patentanwälte PartG mbB

(56) References cited:
- DE-A1-102011 006 614
- DE-B3-102013 211 404
- DE-B3-102018 104 817
- DE-U1-202014 101 765

## Description

The present invention relates to a device fixing a bicycle frame to a bike carrier comprising a base body defining a longitudinal axis, a clamping device being arranged at one end region of the base body in order to connect the base body to a yoke of a bike carrier, the clamping device comprising at least two clamping elements which form between them a receptacle for the yoke and are movable relative to one another between an open position, in which the clamping device can be attached to or removed from the yoke, and a clamping position, in which the clamping device engages around the yoke in a fixing manner, and a tensioning device being arranged at the other end region of the base body in order to connect the base body to the frame of a bicycle, the device further comprising actuating means in order to move the clamping elements relative to one another between the open position and the clamping position, wherein the tensioning device is mounted rotatably about the longitudinal axis with respect to the base body, and wherein the actuating means are designed such that a rotation of the tensioning device about the longitudinal axis of the base body in a closing direction moves the clamping elements relative to one another in the direction of their clamping position and a rotation of the tensioning device in an opening direction opposite to the closing direction moves the clamping elements relative to one another in the direction of their open position.

Such devices are often used in conjunction with load carriers for rear attachment to a motor vehicle such as an automobile. The load carrier are commonly designed as bike carriers and are used to transport bicycles outside the vehicle. Conventional bike carriers comprise a supporting frame to which, for example, profile rails for receiving the wheels of bicycles are attached or can be attached, and at its front end a connecting device by means of which the bike carrier can be attached to the connection head of a conventional towing hook.

To attach the bicycles they are inserted with their wheels into the profile rails and secured against loosening by means of suitable fasteners, for example a tensioning belt. When accelerating or braking a vehicle provided with such a bike carrier, however, high forces are exerted on the fixed bicycles, so that fixing only in the area of the wheels is usually not sufficient. For this reason, bike carriers usually have a yoke that extends vertically upwards from the supporting frame. This yoke is often made of a bent tube profile and serves to additionally support the frame of the bicycles inserted into the profile rails by means of a suitable connecting device. In this way it is ensured that the bicycles are sufficiently fixed to the bike carrier.

Such a connecting device is already known from DE 10 2011 006 614 A. The known device comprises an elongate base body, at one end region of which a clamping device for attachment to the yoke of a bike carrier is arranged, and at the other end region of which a tensioning device in order to connect the base body to the frame of a bicycle is arranged. The clamping device comprises two clamping elements movable relative to each other between an open position, in which the clamping device can be attached to or removed from the yoke of a bike carrier, and a clamping position, in which the clamping elements engage fixedly around the yoke of a bike carrier. A lever is provided on the clamping device for actuation, the lever being connected to the clamping elements via a corresponding kinematic arrangement. The device further comprises a safety mechanism designed in such a way that it is not possible to move the clamping elements towards their open position when the frame of a bicycle is fixed to the tensioning device.

DE 20 2014 101 765 U1 discloses another connecting device which comprises an elongate base body, at one end region of which a clamping device for attachment to a yoke of a bike carrier is arranged. At the other end region a tensioning device is arranged. This tensioning device comprises two tensioning arms which are pivotally connected via a common swivel joint to each other. At the bottom of the two tensioning arms, a nut is arranged which can be screwed onto a central rod. The central rod extends through the whole base body and is axially movable therein. An axial movement of the central rod caused by a rotational movement of the nut allows to bring the clamping elements into their clamping position and out of their clamping position.

A similar configuration is disclosed in DE 10 2013 211 404 B3. The device disclosed also comprises a clamping device which has two clamping elements in order to connect a base body to a first object. At the other end region of the base body a tensioning device is arranged. This tensioning device comprises two tensioning arms which are connected via a common swivel joint. Furthermore, the tensioning device comprises a tensioning nut which serve to tension the tensioning arms against a restoring force of a spring.

Although such connecting devices have proved its worth in principle, it is partly regarded as disadvantageous that the kinematic arrangement, in particular the safety mechanism, is complicated and that the lever-/tensioning nut for actuating the clamping elements is difficult to grasp.

Therefore, the present invention is based on the task of designing a device for connecting two objects in such a way that it avoids the above-mentioned disadvantages and is easy to operate, in particular in combination with the robust design.

In a device of the type mentioned above, this task is solved in that the device further comprises an alignment mechanism which is designed such that the tensioning device can be rotated about the longitudinal axis of the base body in the closing direction, when the clamping elements are in their clamping position, in order to align the tensioning device for attachment to the frame of a bicycle.

This design is based on the consideration to realize a kinematic coupling between the tensioning device arranged at one end of the base body and the clamping elements being arranged at the other end of the base body in such a way that the clamping elements can be moved in the direction of their open position or in the direction of their clamping position by turning the tensioning device. The tensioning device is easily accessible to the operator as it extends away from the yoke of a bike carrier, when the device has been mounted thereon. Furthermore, it is no longer necessary to provide a separate actuating element for the clamping element, so that simple kinematics can be realized.

It is provided that the tensioning device is used on the one hand to actuate the clamping device by rotating it about the longitudinal axis of the base body in an opening direction or in a closing direction, but on the other hand it is also possible to change the rotational position of the tensioning device at the same time, even if the clamping elements are in the clamping position. In concrete terms, this is achieved by turning the clamping device further in the closing direction. Such an alignment mechanism is necessary because, for example, when using the device according to the invention for supporting bicycles inserted in a bike carrier, the tensioning device must be adapted to the orientation of the bicycle frame. For example, men's and women's bicycles differ in that men's bicycles usually have an essentially horizontally extending central frame section, whereas women's bicycles usually have an inclined central frame section. Such an alignment mechanism therefor makes sense for flexible use of the device according to the invention.

According to a further embodiment of the present invention, the actuating means may comprise a coupling rod which extends axially displaceable in the base body between the clamping device and the tensioning device and is operatively connected to the tensioning device in such a way that a rotary movement of the tensioning device can be converted into a translational movement of the coupling rod in order to move the clamping elements in the direction of their clamping position or in the direction of their open position. In other words, a kinematic connection between the clamping device and the tensioning device is realized by converting a rotary movement of the tensioning device into a translational movement of the coupling rod so that the latter can transmit the movement to the clamping device arranged at the other end region of the base body.

Preferably, the tensioning device is operatively connected to the coupling rod via a threaded connection. Such a threaded connection is basically a simple and efficient way to convert a rotary movement into a translational movement. In conjunction with this, the coupling rod can be mounted axially displaceable but in a torque-proof manner in the base body in order to prevent the coupling rod from rotating, when the tensioning device is turned. This ensures that the rotary movement of the tensioning device is exclusively converted into a translational movement of the coupling rod. The torque-proof mounting of the coupling rod in the base body can be achieved, for example, by feather key arranged in the coupling rod which engages in a corresponding groove formed in the base body, or by a suitable cross-sectional profile which extends into a corresponding opening in the base body. Alternatively, it is also conceivable that the coupling rod is rotatably mounted in the base body. In this case, the coupling rod must be prevented from turning in some other way when a rotary movement of the tensioning device is to be converted into a translational movement of the coupling rod. For example, this can be done by manually holding a section of the coupling rod protruding from the base body.

According to a further embodiment of the invention, the alignment mechanism comprises coupling means having an inner coupling element operatively connected to the coupling rod by means of a threaded connection, and an outer coupling element which is connected to the tensioning device in a torque-proof manner, the inner and outer coupling element corresponding to each other such that they are always coupled in a torque-proof manner to each other during rotation of the tensioning device, when the clamping elements are outside their clamping position, and that they are coupled in a torque-proof manner to each other, when the tensioning device is being rotated in the opening direction, and are decoupled from each other, when the tensioning device is being rotated in the closing direction, when the clamping elements are in their clamping position, so that the tensioning device can be aligned according to the orientation of the frame of a bicycle by rotation in the closing direction, when the clamping elements are in their clamping position.

This design is based on the consideration of connecting one coupling element to the coupling rod and connecting another coupling element to the clamping device in a torque-proof manner, so that a coupling connection can be realized between the two coupling elements. It is intended that the coupling elements move uniformly and are thus coupled to each other as long as the clamping elements are outside the clamping position. This is necessary in order to be able to move the clamping elements both in the direction of their clamping position and in the direction of their open position by turning the tensioning device about the longitudinal axis of the base body. If, on the other hand, the clamping elements are in their clamping position, it is necessary to be able to move them out of the clamping position by turning the clamping device in its opening direction if the device is to be separated from the yoke of a bike carrier. On the other hand, the clamping device can be aligned if the clamping elements are in their clamping position and the clamping device is turned further in the closing direction. In this case, the decoupling of the two coupling elements from each other does not increase the clamping force exerted by the clamping elements on the yoke, but allows the tensioning device to be aligned.

According to an embodiment of the invention, it is provided that the inner coupling element and the outer coupling element are in engagement with each other by means of suitable engagement means. The engagement means may comprise a toothing formed on the inner coupling element and a counter-toothing formed on the outer coupling element, which may in particular be formed as a sawtooth profile. Such a toothing is a simple way of bringing the two coupling elements into contact with each other. The sawtooth profile design ensures that the two coupling parts are always coupled to each other in one direction of rotation, presently in the opening direction so that both coupling parts perform identical rotary movements. In the other direction of rotation, in this case the closing direction, basically the two coupling elements are also engaged. However, the momentum between the coupling elements is not transmitted via tooth flanks perpendicular to the direction of movement, but via tooth flanks oblique to the direction of movement, so that, when a corresponding counterforce occurs, as it is the case when the clamping elements are in their clamping position, a relative displacement of the two coupling elements takes place along the obliquely oriented tooth flanks. The teeth are then briefly disengaged so that the two coupling elements are uncoupled from each other. This allows the clamping device to be turned further in the closing direction when the clamping elements are in their clamping position.

Preferably, the toothing and the counter-toothing are formed on mutually directed end faces of the inner coupling element and the outer coupling element. As a result, when aligning the tensioning device - when the clamping elements are in their clamping position - the movement of the two coupling elements over the obliquely oriented tooth flanks is accompanied by an axial displacement of the two coupling elements relative to each other.

The toothing and the counter-toothing preferably extend over an annular region which is formed concentrically with respect to the longitudinal axis of the base body. In addition, the teeth of the toothing and the counter-toothing can extend in straight line in the radial direction. This design also ensures that the two coupling elements are always arranged concentrically to each other and that the threaded connection of the inner coupling element to the coupling rod or the attachment of the outer coupling element to the tensioning device ensures that the corresponding parts are always centered to each other.

According to a further embodiment of the invention, the inner coupling element and the outer coupling element are axially pressed against each other by pressure means. This ensures that - as long as the clamping elements are outside their clamping position - the two coupling elements are coupled together, although the momentum in the closing direction is transmitted via the obliquely oriented tooth flanks. The compressive force counteracts the tendency of the two coupling elements to shift axially relative to each other as a result of a torque transmission via the obliquely oriented tooth flanks. If, on the other hand, the clamping elements are clamped in their clamping position, the compressive force is overcome against the acting clamping force, so that an axial displacement of the coupling elements relative to each other against the compressive force generated by the pressure means is possible.

In consequence, it is possible to rotate the two coupling elements relative to each other and thus to align the tensioning device.

Advantageously, the pressure means comprise a spring, in particular a helical compression spring, in order to press the inner coupling element and the outer coupling element against each other. The use of such a spring, by selecting the spring with regard to the spring constant or, if necessary, by means of adjustment means available, by means of which the pretensioning force of the spring can be adjusted, enables an exact presetting of the compressive force to be applied, with which the two coupling elements are pressed against each other.

According to a further embodiment of the invention, the coupling means also include a guide bushing, which is screwed onto the coupling rod and on which the inner coupling element is mounted axially slidably. The coupling means may further comprise a housing element which receives the inner coupling element, is fixedly connected to the guide bushing and comprises guiding means, which are engaged with suitable counter means of the inner coupling element such that the inner coupling element is connected to the housing element in a torque-proof manner but axially displaceable relative thereto. A guide bushing screwed onto the coupling rod allows the coupling means to be designed in such a way that the inner coupling element is not screwed directly onto the coupling rod. A housing element fixedly connected to the guide bushing, the housing element surrounding the inner coupling element and thus defining an interior space in which the inner coupling element is mounted axially displaceable but fixed in a torque-proof manner to the unit of guide bushing and housing element, allows an integral construction so that the coupling means can be provided as a pre-assembled unit. This considerably simplifies the assembly of the device according to the present invention.

The guiding means may comprise a plurality of, in particular four radially projecting protrusions being distributed over the circumference, and the counter means may comprise axially extending grooves in engagement with these. This creates a shaft-to-collar connection between the housing element and the inner coupling element while at the same time an axial mobility of the inner coupling element relative to the housing element is guaranteed.

The spring used to press the inner coupling element and the outer coupling element against each other is preferably supported against the housing element and the inner coupling element.

Preferably, the outer coupling element comprises connection means for attachment to the tensioning device. In particular, the connection means may comprise bores for fastening screws by means of which the outer coupling element can be screwed to the tensioning device, in particular to a basic body of the tensioning device. This makes it possible to achieve a robust torsionally and axially rigid connection with the tensioning device, which enables the transmission of corresponding torques.

The tensioning device and at least one clamping element are preferably clamped against the base body when the clamping elements are in their clamping position. In consequence, the clamping elements are simultaneously secured against unintentional release by bracing against the base body and the associated frictional forces.

Advantageously, the coupling rod is connected in a torque-proof manner to a pressure element, which can be brought into engagement with at least one clamping element in a torque-proof manner, in order to clamp the tensioning device and the at least one clamping element against the base body. The pressure element can be arranged at one end of the coupling rod and protrudes radially from it in order to engage with the clamping element. Specifically, the at least one clamping element can have a deepening, in particular in the shape of a V, with which the pressure element can be brought into engagement. In this case, the pressure element has a counter-contour corresponding to the V-shaped deepening. The V-shaped deepening also prevents unintentional rotation of the coupling rod about the longitudinal axis of the base body when the pressure element is in engagement with the deepening.

In a further embodiment of the invention, one clamping element can be arranged fixedly on the base body as a stationary clamping element, and the other clamping element is pivotably mounted on the stationary clamping element. In particular, the swivel axis of the pivoting clamping element can be skewed to the longitudinal axis of the base body. This allows the pivoting clamping element to be swiveled out to attach the device to the yoke of a bike carrier.

Preferably, both clamping elements each have a contact surface for contact with the yoke of a bike carrier. Concretely, the contact surfaces may be formed substantially as a partial segment of a shell of a circular cylinder. The contact surfaces can have a friction-enhancing surface, for example by means of rubber inserts or by means of a suitable, in particular continuous coating. This enables a stable attachment to the yoke of a bike carrier.

To connect the stationary clamping element to the base body, the latter may have a recess, in particular an annular recess, into which the base body extends, the base body in particular being bonded to the stationary clamping element. Such a recess enables a robust design with a possibility of transmitting relatively high bending momentums. In principle, it is also conceivable to weld or solder the base body to the stationary clamping element, or to connect it using a force-locking press connection, or to screw the stationary clamping element onto the base body using a threaded connection.

The tensioning device may comprise a basic body, which is provided with an abutment surface for the frame of a bicycle and a tensioning element being connected to the basic body and formed in such a way that the frame of a bicycle can be tensioned between the tensioning element and the abutment surface of the basic body. Concretely, the tensioning element may be formed as a tensioning belt, which is connected at its one end region to the basic body, in particular articulately connected, and may comprise at its free end region a toothing by means of which the tensioning belt can be latched in a corresponding latching mechanism which is fastened to the basic body of the tensioning device.

Thus, for example, the frame of a bicycle can be tensioned on the tensioning device in a manner known per se by bringing the frame into contact with the abutment surface, placing the tensioning belt with its free end around the bicycle frame and latching it in a corresponding latching mechanism with a toothing formed on the tensioning belt.

The tensioning device may also include a locking mechanism which is designed such that unintentional opening of the tensioning element is prevented. Specifically, this can include a lock operable with a key. This prevents, for example, the accidental loosening of the tensioning device in the event of vibrations, such as those which can occur when using the device on a bike carrier when driving over bumps in the ground, so that sufficient securing of a bicycle placed on the bike carrier would no longer be given. In addition, a lock which can be operated with a key is an anti-theft device if, for example, a motorvehicle having such a bike carrier is placed on a car parking. The locking mechanism not only prevents against unintentional opening of the tensioning element, but also prevents the clamping device from being released from the yoke of a bike carrier ,as the tensioning device cannot be rotated about the longitudinal axis of the base body as long as a frame of a bicycle is tensioned between the tensioning element and the abutment surface of the basic body.

Preferably, the base body is formed as a tubular component and comprises at its end facing the tensioning device a stop end face against which the tensioning device comes into stop when the clamping elements are in their clamping position.

Further details of the present invention, reference is made to the sub claims as well as to the enclosed drawing and the corresponding description of the embodiment shown. In the drawing shows:
- Fig. 1: a bike carrier attached to the rear of a motor vehicle having two devices according to the present invention in a perspective view;
- Fig. 2: a device according to the present invention in a perspective view;
- Fig. 3: the device from Fig. 2 in a longitudinal sectional view;
- Fig. 4: the device from Fig. 2 in a side view, with the clamping elements in an open position;
- Fig. 5: the device from Fig. 2 in a side view, with the clamping elements in their clamping position;
- Fig. 6: the device from Fig. 2 in the area of the coupling means in a detailed sectional view;
- Fig. 7: the coupling means of the device from Fig. 2 in a partially cutted perspective view;
- Fig. 8: the guide bushing of the device from Fig. 2 in a perspective view;
- Fig. 9: the housing element of the device from Fig. 2 in a perspective view;
- Fig. 10: the inner coupling element of the device from Fig. 2 in a perspective view;
- Fig. 11: the outer coupling element of the device from Fig. 2 in a perspective view;
- Fig. 12: the tensioning device of the device from Fig. 2 in a detailed sectional view.

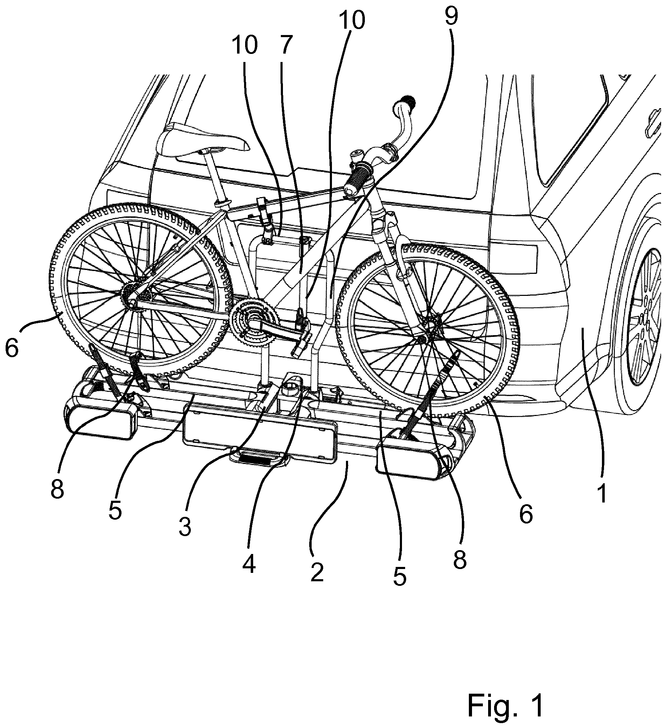

Fig. 1 shows a motor vehicle 1 with a rear-mounted bike carrier 2, which has a supporting frame 3 and, at its front end, a connection device 4 for attachment to a trailer coupling of the motor vehicle 1. Two profile rails 5 protrude from each side of the supporting frame 3. The wheels 6 of a bicycle 7 are positioned in the two front profile rails 5 and fastened to them by means of a tension belt 8.

A vertically extending yoke 9 made of a bent tube profile is also fitted in the front end area of the supporting frame 3. At the upper end of the yoke 9 there are two devices 10 for fixing a bicycle frame to a bike carrier according to this invention. One device 10 is connected to the frame of the bicycle 7, whereas the other device 10 is not used, but hangs vertically on the yoke 9.

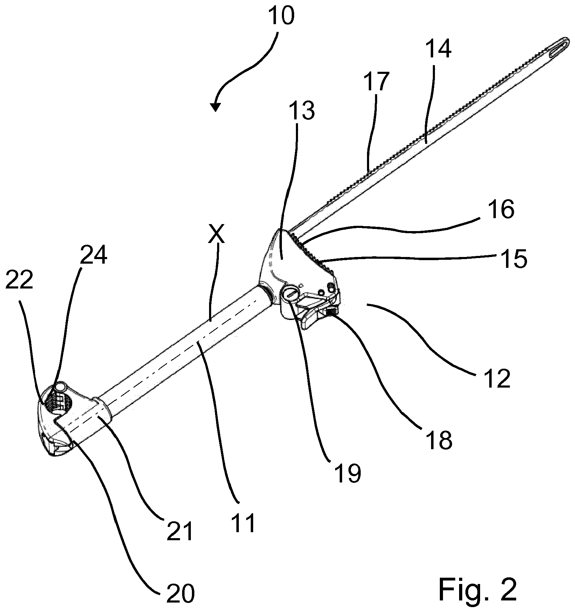

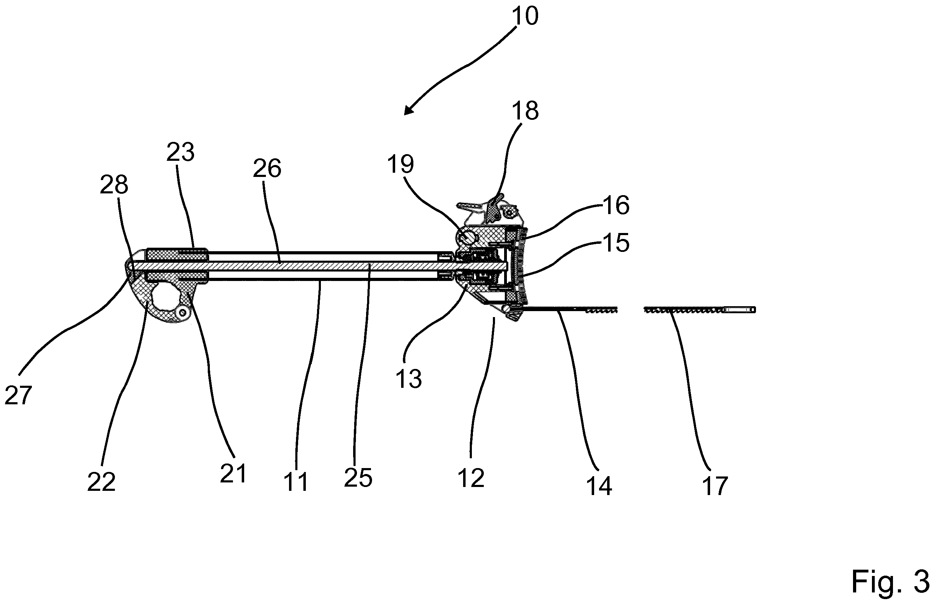

Fig. 2 and 3 show the device 10 according to this invention for connecting two objects, presently for fixing the frame of the bicycle 7 to the yoke 9 of the bike carrier 2. The device 10 comprises a tubular base body 11 defining a longitudinal axis X, which is made of a metallic material, concretely an aluminum alloy for weight reasons.

A tensioning device 12 is arranged at one end area of the base body 11 on the right-hand side of figures 2 and 3 in order to connect the base body 11 to the frame of the bicycle 7. The tensioning device 12 is mounted so that it can rotate about the longitudinal axis X of the base body 11.

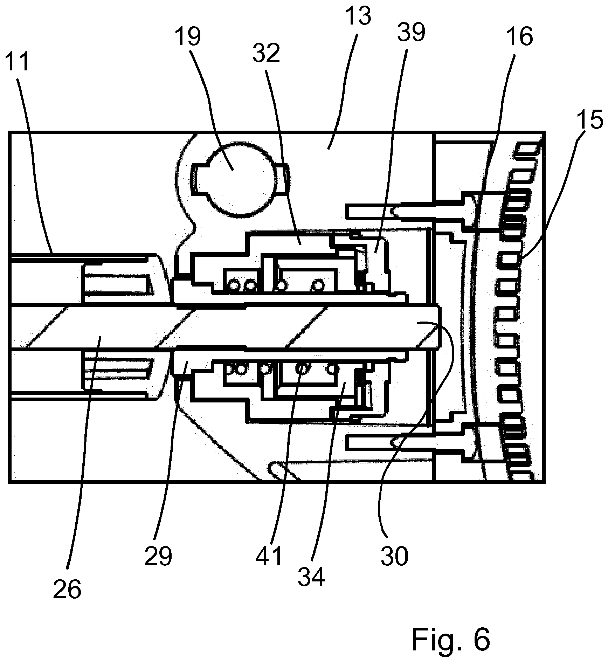

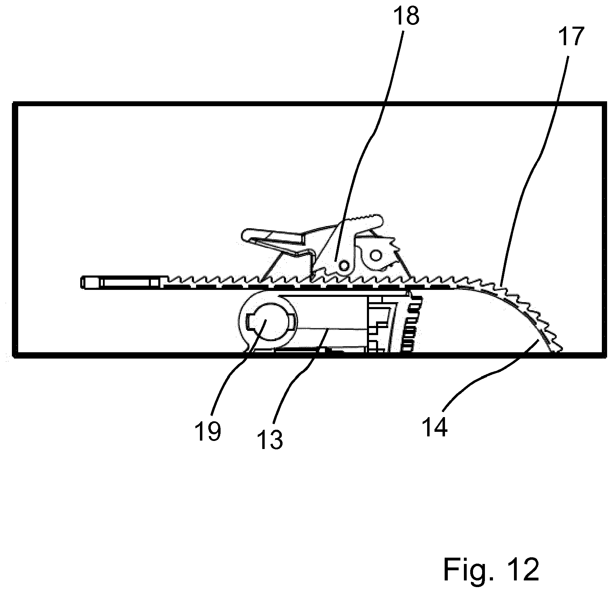

The tensioning device 12 has a basic body 13 and an tensioning element connected to it and designed as a flexible tensioning belt 14. The basic body 13 is provided with an abutment surface 15 for the frame of the bicycle 7. As it can be seen in detail in figures 6 and 12, the abutment surface 15 is formed by an abutment component 16 screwed to the basic body 13. The flexible tensioning belt 14 is hingedly connected to the basic body 13 at its one end and has a toothing 17 at its free end by means of which the tensioning belt 14 can be latched into a latching mechanism 18, which is also fastened to the basic body 13, as shown in figure 12. The tensioning device further comprises a locking mechanism having a key-operated lock 19. This prevents unintentional opening of the tensioning belt 14.

At the other end of the base body 11, in figures 2 and 3 on the left-hand-side, a clamping device 20 is arranged to connect the base body 11 with the yoke 9 of the bike carrier 2. The clamping device 20 comprises two clamping elements 21, 22, wherein one clamping element 21 is fixed to the base body 11 as a stationary clamping element and the other clamping element 22 is pivotably mounted on the stationary clamping element 21. The stationary clamping element 21 has an annular recess for attachment to the base body 11, into which the base body 11 extends. The base body 11 and the stationary clamping element 21 are bonded together.

The two clamping elements 21, 22 form between them a receptable for the yoke 9 and are movable relative to each other between an open position, in which the clamping device 20 can be attached to or removed from the yoke 9, and a clamping position, in which the clamping device 20 engages around the yoke 9 in a fixing manner.

Both clamping elements 21, 22 each have a contact surface 24 for contacting the yoke 9 of the bike carrier 2, wherein the contact surfaces 24 are substantially formed as a partial segment of a shell of a circular cylinder corresponding to the outer contour of the yoke 9.

To move the clamping elements 21, 22 between the open position and the closed position relative to one another, the device 10 further comprises actuating means 25 arranged such that rotation of the tensioning device 12 about the longitudinal axis X in a closing direction moves the pivotable clamping element 22 in the direction of the clamping position and rotation of the tensioning device 12 in an opening direction opposite to the closing direction moves the clamping element 22 in the direction of the open position.

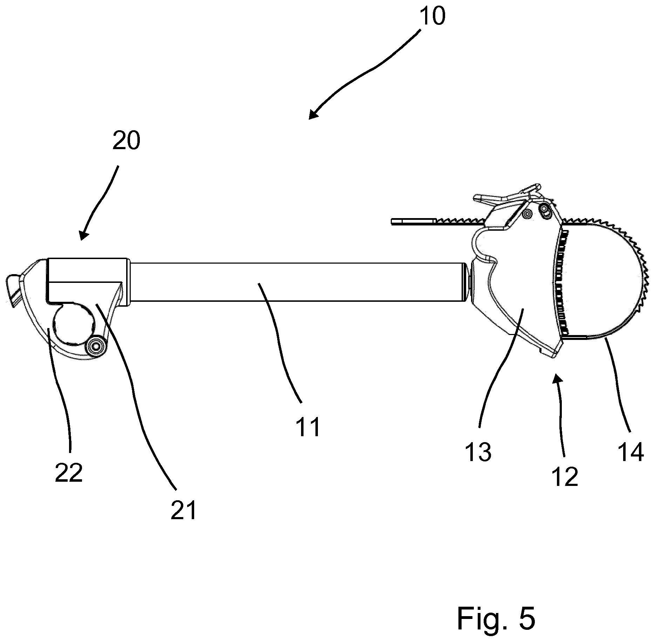

In concrete terms, the actuating means 25 comprise a coupling rod 26 which extends axially displaceable in the base body 11 between the clamping device 20 and the tensioning device 12. The coupling rod 26 is operatively connected to the tensioning device via a threaded connection, so that a rotary movement of the tensioning device 12 can be converted into a translational movement of the coupling rod 26. At its end facing the clamping device 20, the coupling rod 26 is connected to a pressure element 27 in a torque-proof manner. This pressure element 27 can be engaged with a V-shaped deepening of the pivotable clamping element 22 to move the pivotable clamping element 22 to the clamping position as it is shown in figure 5.

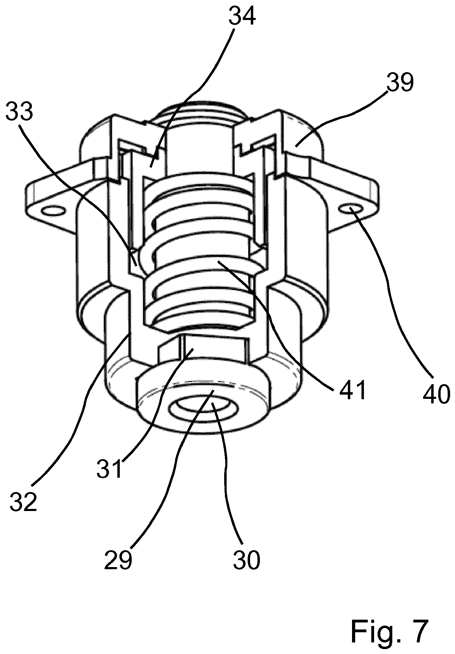

The device 10 further comprises an alignment mechanism which is designed such that the tensioning device 12 can be rotated in the closing direction about the longitudinal axis X of the base body 11, when the two clamping elements 21, 22 are in their clamping position. The tensioning device 12 can thus be aligned according to the orientation of the bicycle frame. For this purpose, the alignment mechanism comprises coupling means, which are shown in detail in figures 6 to 11.

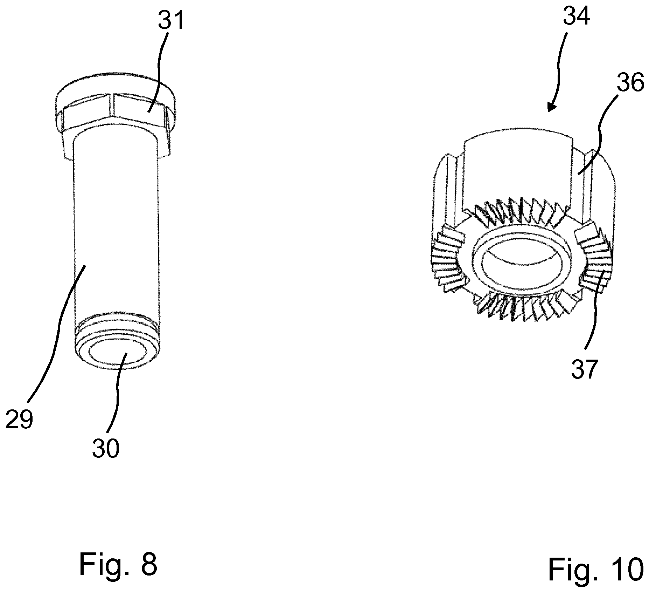

The coupling means comprise a guide bushing 29, which is screwed onto the coupling rod 26. The guide bushing 29 shown in figure 8 as an individual component has a passage opening 30 with an internal thread to accommodate the coupling rod 26, as well as an outer hexagonal profile 31 in one end area.

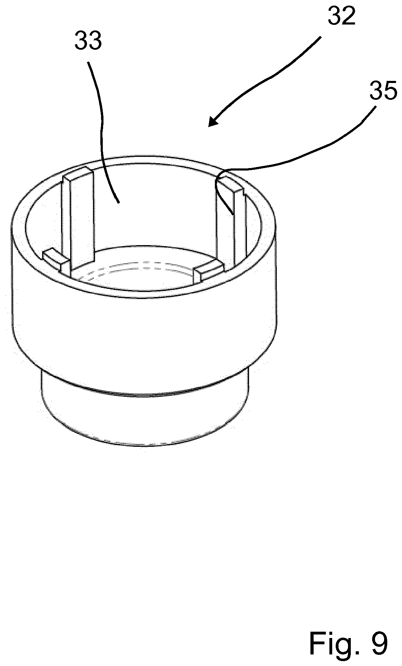

By means of this hexagonal profile 31, the guide bushing is connected to a housing element 32, which is shown in detail in figure 9, in a torque-proof and axially fixed manner. The housing element 32 defines an interior space 33 in which an inner coupling element 34 is received and connected to the housing element 32 in a torque-proof manner, but can be displaced axially relative to the housing element 32.

For this purpose, the housing element 32 has guiding means in the form of four circumferentially distributed radially projecting protrusions 35 which engage into corresponding counter-means in the form of axially extending grooves 36 formed in the inner coupling element 34. By means of this arrangement, the inner coupling element 34 is indirectly connected to the coupling rod 26 via a threaded connection.

The inner coupling element 34 has a toothing 37 with a sawtooth profile at one end face. The individual teeth extend in a radial direction over an annular area which is formed concentrically to the longitudinal axis X of the base body 11.

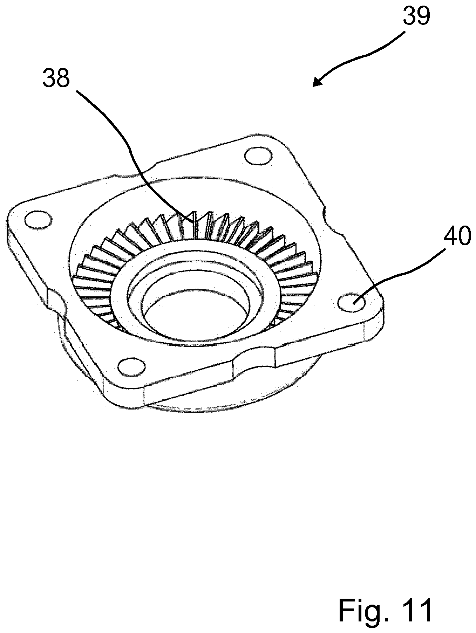

The toothing 37 is in engagement with a corresponding counter-toothing 38 of an outer coupling element 39, which is connected to the basic body 13 of the tensioning device 12 in a torque-proof manner. Therefore, the outer coupling element 39 shown in detail in figure 11 has corresponding connecting means which comprise bores 40 for fastening screws by means of which the outer coupling element 39 can be screwed to the basic body 13 of the tensioning device 12.

The coupling means further comprise a helical compression spring 41 by means of which the inner coupling element 34 and the outer coupling element 39 are pressed against each other. The helical compression spring 41 is supported against the housing element 32 and the inner coupling element 34.

By means of this arrangement it is realized that the inner coupling element 34 and the outer coupling element 39 correspond to one another in such a way that they are always coupled to one another in a torque-proof manner, when the clamping elements 21, 22 are outside their clamping position when the tensioning device 12 is turned about the longitudinal axis X of the base body 11. When the clamping elements 21, 22 are in their clamping position, the two coupling elements 34, 39 are coupled to one another in a torque-proof manner, when the tensioning device 12 is rotated in the opening direction, and the two coupling elements 34, 39 are uncoupled from one another, when the tensioning device 12 is rotated in the closing direction. This makes it possible to align the tensioning device 12 by turning it in the closing direction according to the orientation of the bicycle frame when the clamping elements 21, 22 are in their clamping position.

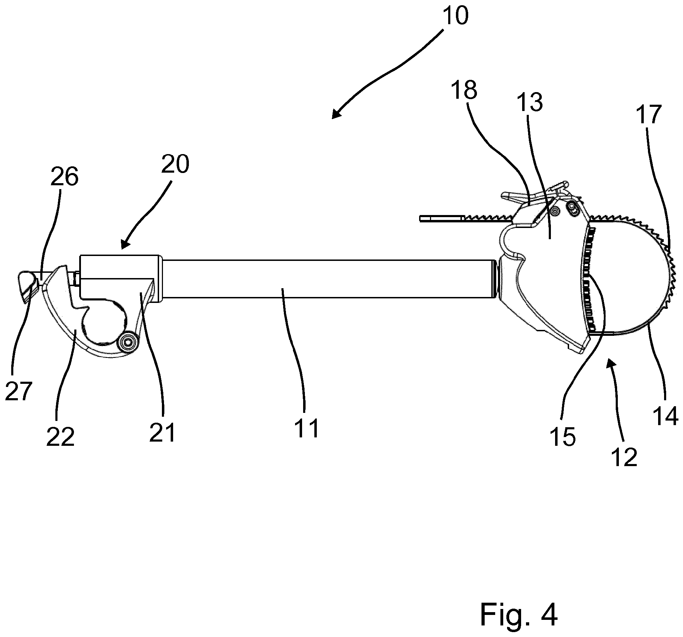

If the device 10 according to the present invention is to be attached to the bike carrier shown in figure 1, the clamping elements 21, 22 must first be brought into their open position, as shown in figure 4. For this purpose, the tensioning device 12 is turned in its opening direction until the pressure element 27 protrudes from the base body 11 as far as it does not engage with the V-shaped deepening 28 of the pivotable clamping element 22. The pivotable clamping element 22 can then be opened so far that the clamping device 20 can be placed on the yoke 9.

The tensioning device 12 is then turned in its closing direction until the pressure element 27 has engaged into the V-shaped deepening 28 of the pivotable clamping element 22 and the pivotable clamping element 22 has been brought into its clamping position. Thus, the two clamping elements 21, 22 grip the yoke 9 of the bike carrier 2 by fixing it as shown in figure 5.

Before the tensioning device 12 can be attached to the frame of the bicycle, it must be aligned according to the orientation of the frame. For this purpose, the tensioning device can be turned further in the closing direction, even if the clamping elements 21, 22 are already in their clamping position. Due to the sawtooth profile of the toothing 37 and the counter-toothing 38, the inner coupling element 34 can shift axially relative to the outer coupling element 39 against the force generated by the helical compression spring 41, when the clamping elements 21, 22 are in their clamping position. The tensioning device 12 is turned further in its closing direction. This allows the tensioning device to be aligned with the orientation of the bicycle frame.

### Reference Character List

- 1: Motor Vehicle
- 2: Bike Carrier
- 3: Supporting Frame
- 4: Connection Device
- 5: Profile Rail
- 6: Wheel
- 7: Bicycle
- 8: Tension Belt
- 9: Yoke
- 10: Device
- 11: Base Body
- 12: Tensioning Device
- 13: Basic Body
- 14: Tensioning Belt
- 15: Abutment Surface
- 16: Abutment Component
- 17: Toothing
- 18: Latching Mechanism
- 19: Lock
- 20: Clamping Device
- 21: Stationary Clamping Element
- 22: Pivotable Clamping Element
- 23: Recess
- 24: Contact Surface
- 25: Actuating Means
- 26: Coupling Rod
- 27: Pressure Element
- 28: Deepening
- 29: Guide Bushing
- 30: Passage Opening
- 31: Hexagonal Profile
- 32: Housing Element
- 33: Interior Space
- 34: Inner Coupling Element
- 35: Protrusion
- 36: Groove
- 37: Toothing
- 38: Counter-Toothing
- 39: Outer Coupling Element
- 40: Bore
- 41: Helical Compression Spring
- X: Longitudinal Axis

## Claims

1. Device (10) for fixing a bicycle frame to a bike carrier (2), comprising
a base body (11) defining a longitudinal axis (X),
a clamping device (20) being arranged at one end region of the base body (11) in order to connect the base body (11) to a yoke (9) of a bike carrier (2), the clamping device (20) comprising at least two clamping elements (21, 22) which form between them a receptacle for the yoke and are movable relative to one another between an open position, in which the clamping device (20) can be attached to or removed from the yoke, and a clamping position, in which the clamping device (20) engages around the yoke in a fixing manner, and
a tensioning device (12) being arranged at the other end region of the base body (11) in order to connect the base body (11) to the frame of a bicycle (7),
the device (10) further comprising actuating means (25) in order to move the clamping elements (21, 22) relative to one another between the open position and the clamping position, wherein
the tensioning device (12) is mounted rotatably about the longitudinal axis (X) with respect to the base body (11), and wherein the actuating means (25) are designed such that a rotation of the tensioning device (12) about the longitudinal axis (X) of the base body (11) in a closing direction moves the clamping elements (21, 22) relative to one another in the direction of their clamping position and a rotation of the tensioning device (12) in an opening direction opposite to the closing direction moves the clamping elements (21, 22) relative to one another in the direction of their open position **characterized in that** the device (10) further comprises an alignment mechanism which is designed such that the tensioning device (12) can be rotated about the longitudinal axis (X) of the base body (11) in the closing direction, when the clamping elements (21, 22) are in their clamping position, in order to align the tensioning device (12) for attachment to the frame of a bicylce.

2. Device (10) according to claim 1, **characterized in that** the actuating means comprise a coupling rod (26) which extends axially displaceable in the base body (11) between the clamping device (20) and the tensioning device (12) and is operatively connected to the tensioning device (12) in such a way that a rotary movement of the tensioning device (12) can be converted into a translational movement of the coupling rod (26) in order to move the clamping elements (21, 22) in the direction of their clamping position or in the direction of their open position.

3. Device (10) according to claim 2, **characterized in that** the tensioning device (12) is operatively connected to the coupling rod (26) via a threaded connection.

4. Device according to claim 3, **characterized in that** the alignment mechanism comprises coupling means having
an inner coupling element (34) operatively connected to the coupling rod (26) by means of a threaded connection, and
an outer coupling element (39) which is connected to the tensioning device (12) in a torque-proof manner,
the inner (34) and outer coupling element (39) corresponding to each other such
that they are always coupled in a torque-proof manner to each other during rotation of the tensioning device (12), when the clamping elements (21, 22) are outside their clamping position, and
that they are coupled in a torque-proof manner to each other, when the tensioning device (12) is being rotated in the opening direction, and are decoupled from each other, when the tensioning device (12) is being rotated in the closing direction, when the clamping elements (21, 22) are in their clamping position,
so that the tensioning device (12) can be aligned according to the orientation of the frame of a bicycleby rotation in the closing direction, when the clamping elements (21, 22) are in their clamping position.

5. Device (10) according to claim 4, **characterized in that** the inner coupling element (34) and the outer coupling element (39) are in engagement with each other by means of suitable engagement means, wherein, in particular, the inner coupling element (34) and the outer coupling element (39) are axially pressed against each other by pressure means, that preferably comprise a spring, in particular a helical compression spring (41), in order to press the inner coupling element (34) and the outer coupling element (39) against each other.

6. Device (10) according to claim 5, **characterized in that** the engagement means comprise a toothing (37) formed on the inner coupling element (34) and a counter-toothing (38) formed on the outer coupling element (39), wherein, in particular, the toothing (37) and the counter-toothing (38) have a sawtooth profile and/or the toothing (37) and the counter-toothing (38) are formed on mutually directed end faces of inner coupling element (34) and the outer coupling element (39) and/or the toothing (37) and the counter-toothing (38) extend over an annular region which is formed concentrically with respect to the longitudinal axis (X) of the base body (11) and/or the teeth of the toothing (37) and the counter-toothing (38) extend in a straight line in the radial direction.

7. Device (10) according to any of claims 4 to 6, **characterized in that** the coupling means comprise a guide bushing (29), which is screwed onto the coupling rod (26) and on which the inner coupling element (34) is mounted axially slidably.

8. Device (10) according to claim 7, **characterized in that** the coupling means further comprise a housing element (32) which receives the inner coupling element (34), is fixedly connected to the guide bushing (29) and comprises guiding means, which are engaged with suitable counter means of the inner coupling element (34) such that the inner coupling element (34) is connected to the housing element (32) in a torque-proof manner, but axially displaceable relative thereto, wherein, in particular, the guiding means comprise a plurality of, preferably four radially projecting protrusions (35) being distributed over the circumference and the counter means comprise axially extending grooves (36) in engagement with these.

9. Device (10) according to claim 8, wherein the inner coupling element (34) and the outer coupling element (39) are axially pressed against each other by pressure means, the pressure means comprising a spring, in particular a helical compression spring (41), in order to press the inner coupling element (34) and the outer coupling element (39) against each other, **characterized in that** the spring (41) is supported against the housing element (32) and the inner coupling element (34).

10. Device (10) according to any of claims 4 to 9, **characterized in that** the outer coupling element (39) comprises connection means for attachment to the tensioning device (12), wherein, in particular, the connection means comprise bores (40) for fastening screws by means of which the outer coupling element (39) can be screwed to the tensioning device (12), preferably to a basic body (13) of the tensioning device (12).

11. Device (10) according to any of claims 2 to 10, **characterized in that** the tensioning device (12) and at least one clamping element (22) are clamped via the coupling rod (26) against the base body (11) when the clamping elements (21, 22) are in their clamping position, wherein, in particular, the coupling rod (26) is connected to a pressure element (27) in a torque-proof manner, which can be brought into engagement with at least one clamping element (22) in a torque-proof manner, in order to clamp the tensioning device (12) and the at least one clamping element (22) against the base body (11), the at least one clamping element (22) preferably having a deepening, in particular in the shape of a V, with which the pressure element (27) can be brought into engagement.

12. Device (10) according to any of the preceding claims, **characterized in that** one clamping element (21) is arranged fixedly on the base body (11) as a stationary clamping element (21), and **in that** the other clamping element (22) is pivotably mounted on the stationary clamping element (21), wherein, in particular, the stationary clamping element (21) has a recess (23), preferably an annular recess, into which the base body (11) extends, the base body (11) preferably being bonded to the stationary clamping element (21), and/or in that both clamping elements (21, 22) each have a contact surface (24) for contact with a first object, wherein, preferably, the contact surfaces (24) are formed substantially as a partial segment of a shell of a circular cylinder.

13. Device (10) according to any of the preceding claims, **characterized in that** the tensioning device (12) comprises a basic body (13), which is provided with an abutment surface (15) for the second object, in particular for the frame of a bicycle (7), and a tensioning element (14) being connected to the basic body (13) and formed in such a way that the frame of a bicyclecan be tensioned between the tensioning element (14) and the abutment surface (15) of the basic body (13), wherein, in particular, the tensioning element (14) is formed as a tensioning belt (14), which is connected at its one end region to the basic body (13), preferably articulatedly connected, and comprises at its free end region a toothing (17) by means of which the tensioning belt (14) can be latched in a corresponding latching mechanism (18) which is fastened to the basic body (13) of the tensioning device (12) and/or the tensioning device (12) further comprises a locking mechanism which is designed such that unintentional opening of the tensioning element (14) is prevented, the locking mechanism preferably comprising a lock (19) operable with a key.

14. Device (10) according to any of the preceding claims, **characterized in that** the base body (11) is formed as a tubular component and comprises at its end facing the tensioning device (12) a stop end face against which the tensioning device (12) comes into stop when the clamping elements (21, 22) are in their clamping position.

## Patentansprüche

1. Vorrichtung (10) zum Fixieren eines Fahrradrahmens an einem Fahrradträger (2), mit
einem Grundkörper (11), der eine Längsachse (X) definiert,
einer Klemmeinrichtung (20), die an einem Endbereich des Grundkörpers (11) angeordnet ist, um den Grundkörper (11) mit einem Bügel (9) eines Fahrradträgers (2) zu verbinden, wobei die Klemmeinrichtung (20) mindestens zwei Klemmelemente (21, 22) umfasst, die zwischen sich eine Aufnahme für den Bügel (9) bilden und relativ zueinander zwischen einer geöffneten Position, in der die Klemmeinrichtung (20) an dem Bügel (9) anbringbar oder von diesem entnehmbar ist, und einer Klemmposition, in welcher die Klemmeinrichtung (20) den Bügel (9) fixierend umgreift, bewegbar sind, und
einer Spanneinrichtung (12), die am anderen Ende des Grundkörpers (11) angeordnet ist, um den Grundkörper (11) dem Rahmen eines Fahrrads (7) zu verbinden,
wobei die Vorrichtung (10) ferner Betätigungsmittel (25) umfasst, um die Klemmelemente (21, 22) zwischen der geöffneten Position und der Klemmposition relativ zueinander zu bewegen,
wobei die Spanneinrichtung (12) um die Längsachse (X) drehbar zu dem Grundkörper (11) gelagert ist, und wobei die Betätigungsmittel (25) derart ausgestaltet sind, dass eine Drehung der Spanneinrichtung (12) um die Längsachse (X) des Grundkörpers (11) in einer Schließrichtung die Klemmelemente (21, 22) relativ zueinander in Richtung ihrer Klemmposition bewegt und eine Drehung der Spanneinrichtung (12) in einer zur Schließrichtung entgegengesetzten Öffnungsrichtung die Klemmelemente (21, 22) relativ zueinander in Richtung ihrer geöffneten Position bewegt, **dadurch gekennzeichnet, dass** diese ferner einen Ausrichtmechanismus aufweist, welcher derart ausgestaltet ist, dass die Spanneinrichtung (12) in der Schließrichtung um die Längsachse (X) des Grundkörpers (11) gedreht werden kann, wenn sich die Klemmelemente (21, 22) in ihrer Klemmposition befinden, um die Spanneinrichtung (14) zum Anbringen an dem Rahmen eines Fahrrads ausrichten zu können.

2. Vorrichtung (10) nach Anspruch 1, **dadurch gekennzeichnet, dass** die Betätigungsmittel eine Koppelstange (26) umfassen, welche sich axial verschiebbar im Grundkörper (11) zwischen der Klemmeinrichtung (20) und der Spanneinrichtung (12) erstreckt und mit der Spanneinrichtung (12) derart wirkverbunden ist, dass eine Drehbewegung der Spanneinrichtung (12) in eine translatorische Bewegung der Koppelstange (26) umgesetzt werden kann, um die Klemmelemente (21, 22) in Richtung ihrer Klemmposition oder in Richtung ihrer geöffneten Position zu bewegen.

3. Vorrichtung (10) nach Anspruch 2, **dadurch gekennzeichnet, dass** die Spanneinrichtung (12) über eine Gewindeverbindung mit der Koppelstange (26) wirkverbunden ist.

4. Vorrichtung (10) nach Anspruch 3, **dadurch gekennzeichnet, dass** der Ausrichtmechanismus Kupplungsmittel aufweist mit
einem inneren Kupplungselement (34), welches mit der Koppelstange (26) über eine Gewindeverbindung verbunden ist, und
einem äußeren Kupplungselement (39), welches mit der Spanneinrichtung (12) drehfest verbunden ist,
wobei das innere (34) und das äußere Kupplungselement (39) derart miteinander korrespondieren,
dass sie bei einer Drehung der Spanneinrichtung stets drehfest miteinander gekuppelt sind, wenn sich die Klemmelemente (21, 22) außerhalb ihrer Klemmposition befinden, und
dass sie bei einer Drehung der Spanneinrichtung (12) in die Öffnungsrichtung drehfest miteinander gekuppelt und bei einer Drehung der Spanneinrichtung (12) in die Schließrichtung voneinander entkuppelt sind, wenn sich die Klemmelemente (21, 22) in ihrer Klemmposition befinden,
so dass die Spanneinrichtung (12) durch Drehen in die Schließrichtung entsprechend der Orientierung des Rahmens eines Fahrrads ausgerichtet werden kann, wenn sich die Klemmelemente (21, 22) in ihrer Klemmposition befinden.

5. Vorrichtung (10) nach Anspruch 4, **dadurch gekennzeichnet, dass** das innere (34) und das äußere Kupplungselement (39) über geeignete Eingriffsmittel miteinander in Eingriff stehen, wobei, insbesondere, das innere Kupplungselement (34) und das äußere Kupplungselement (39) durch Druckmittel axial gegeneinander gedrückt werden, wobei die Druckmittel bevorzugt eine Feder, insbesondere eine Schraubendruckfeder (41) aufweisen, um das innere Kupplungselement (34) und das äußere Kupplungselement (39) gegeneinander zu drücken.

6. Vorrichtung (10) nach Anspruch 5, **dadurch gekennzeichnet, dass** die Eingriffsmittel eine am inneren Kupplungselement (34) ausgebildete Verzahnung (37) und eine am äußeren Kupplungselement (39) ausgebildete Gegenverzahnung (38) umfassen, wobei , insbesondere die Verzahnung (37) und die Gegenverzahnung (38) ein Sägezahnprofil (34, 39) aufweisen, und/oder die Verzahnung (37) und die Gegenverzahnung (38) an zueinander gerichteten Stirnseiten der beiden Kupplungselemente ausgebildet sind, und/oder sich die Verzahnung (37) und die Gegenverzahnung (38) über einen kreisringförmigen Bereich erstrecken, der konzentrisch zur Längsachse (X) des Grundkörpers (11) ausgerichtet ist, und/oder sich die Zähne der Verzahnung (37) und der Gegenverzahnung (38) geradlinig in radiale Richtung erstrecken.

7. Vorrichtung (10) nach einem der Ansprüche 4 bis 6, **dadurch gekennzeichnet, dass** die Kupplungsmittel eine Führungsbuchse (29) umfassen, welche auf die Koppelstange (26) aufgeschraubt ist und auf welcher das innere Kupplungselement (34) axial gleitend gelagert ist.

8. Vorrichtung (10) nach Anspruch 7, **dadurch gekennzeichnet, dass** die Kupplungsmittel ferner ein Gehäuseelement (32) umfassen, welches das innere Kupplungselement (34) aufnimmt, mit der Führungsbuchse (29) fest verbunden ist und Führungsmittel aufweist, die mit geeigneten Gegenmitteln des inneren Kupplungselements (34) derart in Eingriff stehen, dass das innere Kupplungselement (34) drehfest mit dem Gehäuseelement (32) verbunden ist, jedoch axial relativ zu diesem verschiebbar ist, wobei, insbesondere, die Führungsmittel mehrere, bevorzugt vier über den Umfang verteilte radial vorragende Vorsprünge (35) aufweisen, und die Gegenmittel mit diesen in Eingriff stehende, sich in axiale Richtung erstreckende Nuten (36) umfassen.

9. Vorrichtung (10) nach Anspruch 8, wobei das innere Kupplungselement (34) und das äußere Kupplungselement (39) durch Druckmittel axial gegeneinander gedrückt werden, wobei die Druckmittel eine Feder, insbesondere eine Schraubendruckfeder (41) aufweisen, um das innere Kupplungselement (34) und das äußere Kupplungselement (39) gegeneinander zu drücken, **dadurch gekennzeichnet, dass** sich die Feder (41) gegen das Gehäuseelement (32) und das innere Kupplungselement (34) abstützt.

10. Vorrichtung (10) nach einem der Ansprüche 4 bis 9, **dadurch gekennzeichnet, dass** das äußere Kupplungselement (39) Verbindungsmittel zum Befestigen an der Spanneinrichtung (12) aufweist, wobei, insbesondere, die Verbindungsmittel Bohrungen (40) für Befestigungsschrauben umfassen, durch welche das äußere Kupplungselement (39) mit der Spanneinrichtung (12), bevorzugt mit einem Basiskörper (13) der Spanneinrichtung (12), verschraubt werden kann.

11. Vorrichtung (10) nach einem der Ansprüche 2 bis 10, **dadurch gekennzeichnet, dass** die Spanneinrichtung (12) und mindestens ein Klemmelement (22) über die Koppelstange (26) gegen den Grundkörper (11) verspannt sind, wenn sich die Klemmelemente (21, 22) in ihrer Klemmposition befinden, wobei, insbesondere, die Koppelstange (26) drehfest mit einem Druckelement (27) verbunden ist, welches mit mindestens einem Klemmelement (22) drehfest in Eingriff bringbar ist, um die Spanneinrichtung (12) und das mindestens eine Klemmelement (21) gegen den Grundkörper (11) zu verspannen, wobei mindestens ein Klemmelement (21) bevorzugt eine insbesondere V-förmige Vertiefung aufweist, mit welcher das Druckelement (27) in Eingriff bringbar ist.

12. Vorrichtung (10) nach einem der vorherigen Ansprüche, **dadurch gekennzeichnet, dass** ein Klemmelement (21)als stationäres Klemmelement (21) fest am Grundkörper (11) angeordnet ist und das andere Klemmelement (22) schwenkbar am stationären Klemmelement (21) gelagert ist, wobei, insbesondere, das stationäre Klemmelement (21) eine Aussparung (23), bevorzugt eine ringförmige Aussparung, aufweist, in welche sich der Grundkörper (11) hinein erstreckt, wobei der Grundkörper (11) bevorzugt mit dem stationären Klemmelement verklebt ist, und/oder dass beide Klemmelemente (21, 22) jeweils eine Anlagefläche (24) zur Anlage an einem ersten Gegenstand aufweisen, wobei, bevorzugt, die Anlageflächen (24) im Wesentlichen als Teilsegment eines Mantels eines Kreiszylinders ausgebildet sind

13. Vorrichtung (10) nach einem der vorherigen Ansprüche, **dadurch gekennzeichnet, dass** die Spanneinrichtung (12) einen Basiskörper (13), der mit einer Anschlagfläche (15) für den Rahmen eines Fahrrads (7) versehen ist, und ein mit dem Basiskörper (13) verbundenes Spannelement (14) aufweist und derart ausgebildet ist, dass der Rahmen eines Fahrrads zwischen dem Spannelement (14) und der Anschlagfläche (15) des Basiskörpers (13) verspannt werden kann, wobei, insbesondere, das Spannelement (14) als flexibler Spannriemen (14) ausgebildet ist, welcher an seinem einen Endbereich mit dem Basiskörper (13) verbunden ist, bevorzugt gelenkig verbunden ist, und an seinem freien Endbereich eine Verzahnung (17) aufweist, mittels derer der Spannriemen (14) in einer korrespondierenden ebenfalls am Basiskörper (13) der Spanneinrichtung (13) befestigten Rasthalterung (18) verrastbar ist, und/oder die Spanneinrichtung (12) ferner einen Verriegelungsmechanismus umfasst, welcher derart ausgebildet ist, dass ein unbeabsichtigtes Öffnen des Spannelements (14) verhindert wird, wobei der Verriegelungsmechanismus bevorzugt ein mit einem Schlüssel betätigbares Schloss (19) umfasst.

14. Vorrichtung (10) nach einem der vorherigen Ansprüche, **dadurch gekennzeichnet, dass** der Grundkörper (11) als rohrförmiges Bauteil ausgebildet ist und an seinem der Spanneinrichtung (12) zugewandten Ende eine Anschlagstirnseite aufweist, an welcher die Spanneinrichtung (12) in Anschlag kommt, wenn die Klemmelemente (21, 22) sich in ihrer Klemmposition befinden.

## Revendications

1. Dispositif (10) pour fixer un cadre de bicyclette à un porte-vélo (2), comprenant
un corps de base (11) définissant un axe longitudinal (X),
un dispositif de serrage (20) étant disposé sur une zone d'extrémité du corps de base (11) pour relier le corps de base (11) à un étrier (9) d'un porte-vélo (2), le dispositif de serrage (20) comprenant au moins deux éléments de serrage (21, 22) qui forment entre eux un logement pour l'étrier et qui sont mobiles l'un par rapport à l'autre entre une position ouverte, dans laquelle le dispositif de serrage (20) peut être mis en place ou retiré de l'étrier, et une position de serrage, dans laquelle le dispositif de serrage (20) entoure l'étrier en le fixant, et
un dispositif de tension (12) étant disposé à l'autre région d'extrémité du corps de base (11) afin de relier le corps de base (11) au cadre d'une bicyclette (7),
le dispositif (10) comprenant en outre des moyens d'actionnement (25) afin de déplacer les éléments de serrage (21, 22) l'un par rapport à l'autre entre la position ouverte et la position de serrage,
le dispositif de serrage (12) étant monté de manière rotative autour de l'axe longitudinal (X) par rapport au corps de base (11), et les moyens d'actionnement (25) étant conçus de telle sorte qu'une rotation du dispositif de serrage (12) autour de l'axe longitudinal (X) du corps de base (11) dans une direction de fermeture déplace les éléments de serrage (21, 22) l'un par rapport à l'autre dans la direction de leur position de serrage et qu'une rotation du dispositif de serrage (12) dans une direction d'ouverture opposée à la direction de fermeture déplace les éléments de serrage (21, 22) les uns par rapport aux autres dans la direction de leur position ouverte, **caractérisé en ce que** le dispositif (10) comprend en outre un mécanisme d'alignement qui est conçu de telle sorte que le dispositif de tension (12) peut être tourné autour de l'axe longitudinal (X) du corps de base (11) dans la direction de fermeture, lorsque les éléments de serrage (21, 22) sont dans leur position de serrage, afin d'aligner le dispositif de tension (12) pour la fixation au cadre d'une bicyclette.

2. Dispositif (10) selon la revendication 1, **caractérisé en ce que** les moyens d'actionnement comprennent une tige d'accouplement (26) qui s'étend de manière axialement déplaçable dans le corps de base (11) entre le dispositif de serrage (20) et le dispositif de tension (12) et est reliée de manière opérationnelle au dispositif de tension (12) de telle sorte qu'un mouvement rotatif du dispositif de tension (12) peut être converti en un mouvement de translation de la tige d'accouplement (26) afin de déplacer les éléments de serrage (21, 22) dans la direction de leur position de serrage ou dans la direction de leur position ouverte.

3. Dispositif (10) selon la revendication 2, **caractérisé en ce que** le dispositif de tension (12) est relié fonctionnellement à la tige d'accouplement (26) par une liaison filetée.

4. Dispositif (10) selon la revendication 3, **caractérisé en ce que** le mécanisme d'alignement comprend des moyens d'accouplement ayant
un élément d'accouplement intérieur (34) relié fonctionnellement à la tige d'accouplement (26) au moyen d'un raccord fileté, et
un élément d'accouplement extérieur (39) qui est relié au dispositif de tension (12) d'une manière résistante au couple,
l'élément d'accouplement intérieur (34) et l'élément d'accouplement extérieur (39) se correspondant l'un à l'autre de telle manière
qu'ils sont toujours couplés l'un à l'autre de manière résistante au couple pendant la rotation du dispositif de tension (12), lorsque les éléments de serrage (21, 22) se trouvent en dehors de leur position de serrage, et
qu'ils sont couplés l'un à l'autre de manière résistante au couple de rotation, lorsque le dispositif de tension (12) est tourné dans la direction d'ouverture, et sont découplés l'un de l'autre, lorsque le dispositif de tension (12) est tourné dans la direction de la fermeture, lorsque les éléments de serrage (21, 22) sont dans leur position de serrage,
de sorte que le dispositif de tension (12) peut être aligné selon l'orientation du cadre d'une rotation de bicyclette dans la direction de fermeture, lorsque les éléments de serrage (21, 22) sont dans leur position de serrage.

5. Dispositif (10) selon la revendication 4, **caractérisé en ce que** l'élément d'accouplement intérieur (34) et l'élément d'accouplement extérieur (39) sont en prise l'un avec l'autre au moyen de moyens d'engagement appropriés, l'élément d'accouplement intérieur (34) et l'élément d'accouplement extérieur (39) étant en particulier pressés axialement l'un contre l'autre par des moyens de pression, qui comprennent de préférence un ressort, en particulier un ressort de compression hélicoïdal (41), afin de presser l'élément d'accouplement intérieur (34) et l'élément d'accouplement extérieur (39) l'un contre l'autre.

6. Dispositif (10) selon la revendication 5, **caractérisé en ce que** les moyens d'engagement comprennent une denture (37) formée sur l'élément d'accouplement intérieur (34) et une contre-denture (38) formée sur l'élément d'accouplement extérieur (39), la denture (37) et la contre-denture (38) en particulier présentant un profil en dents de scie et/ou la denture (37) et la contre-denture (38) étant formées sur des faces frontales orientées l'une vers l'autre de l'élément d'accouplement intérieur (34) et de l'élément d'accouplement extérieur (39) et/ou la denture (37) et la contre-denture (38) s'étendant sur une zone annulaire qui est formée concentriquement par rapport à l'axe longitudinal (X) du corps de base (11) et/ou les dents de la denture (37) et de la contre-denture (38) s'étendant en ligne droite dans la direction radiale.

7. Dispositif (10) selon l'une des revendications 4 à 6, **caractérisé en ce que** les moyens d'accouplement comprennent une douille de guidage (29), qui est vissée sur la tige d'accouplement (26) et sur laquelle l'élément d'accouplement intérieur (34) est monté de manière à pouvoir coulisser axialement.

8. Dispositif (10) selon la revendication 7, **caractérisé en ce que** les moyens d'accouplement comprennent en outre un élément de logement (32) qui reçoit l'élément d'accouplement intérieur (34), est relié de manière fixe à la douille de guidage (29) et comprend des moyens de guidage, qui sont engagés avec des contre-moyens appropriés de l'élément d'accouplement intérieur (34) de sorte que l'élément d'accouplement intérieur (34) est relié à l'élément de logement (32) de manière résistante au couple, mais déplaçable axialement par rapport à celui-ci, les moyens de guidage en particulier comprenant une pluralité de, de préférence quatre, saillies faisant saillie radialement (35) réparties sur la circonférence et les contre-moyens comprennent des rainures s'étendant axialement (36) en engagement avec celles-ci.

9. Dispositif (10) selon la revendication 8, l'élément d'accouplement intérieur (34) et l'élément d'accouplement extérieur (39) étant pressés axialement l'un contre l'autre par des moyens de pression, les moyens de pression comprenant un ressort, en particulier un ressort de compression hélico dal (41), afin de presser l'élément d'accouplement intérieur (34) et l'élément d'accouplement extérieur (39) l'un contre l'autre, **caractérisé en ce que** le ressort (41) est supporté contre l'élément de logement (32) et l'élément d'accouplement intérieur (34).

10. Dispositif (10) selon l'une des revendications 4 à 9, **caractérisé en ce que** l'élément d'accouplement extérieur (39) comprend des moyens de liaison pour la fixation au dispositif de tension (12), les moyens de liaison comprenant notamment des alésages (40) pour des vis de fixation au moyen desquelles l'élément d'accouplement extérieur (39) peut être vissé au dispositif de tension (12), de préférence à un corps de base (13) du dispositif de tension (12).

11. Dispositif (10) selon l'une quelconque des revendications 2 à 10, **caractérisé en ce que** le dispositif de tension (12) et au moins un élément de serrage (22) sont serrés par la tige d'accouplement (26) contre le corps de base (11) lorsque les éléments de serrage (21, 22) sont dans leur position de serrage, la tige d'accouplement (26) en particulier étant reliée à un élément de pression (27) de manière résistante au couple, qui peut être mis en engagement avec au moins un élément de serrage (22) de manière résistante au couple, afin de serrer le dispositif de tension (12) et le au moins un élément de serrage (22) contre le corps de base (11), le au moins un élément de serrage (22) présentant de préférence une cavité, en particulier en forme de V, avec laquelle l'élément de pression (27) peut être mis en engagement.

12. Dispositif (10) selon l'une des revendications précédentes, **caractérisé en ce qu'**un élément de serrage (21) est disposé de manière fixe sur le corps de base (11) en tant qu'élément de serrage stationnaire (21), et **en ce que** l'autre élément de serrage (22) est monté de manière pivotante sur l'élément de serrage stationnaire (21), l'élément de serrage stationnaire (21) présentant notamment un évidement (23), en particulier, l'élément de serrage fixe (21) présente un évidement (23), de préférence un évidement annulaire, dans lequel s'étend le corps de base (11), le corps de base (11) étant de préférence collé à l'élément de serrage fixe (21), et/ou **en ce que** les deux éléments de serrage (21, 22) présentent chacun une surface de contact (24) pour le contact avec un premier objet, les surfaces de contact (24) étant de préférence formées essentiellement comme un segment partiel d'une enveloppe d'un cylindre circulaire.

13. Dispositif (10) selon l'une des revendications précédentes, **caractérisé en ce que** le dispositif de tension (12) comprend un corps de base (13), qui est muni d'une surface de butée (15) pour le deuxième objet, en particulier pour le cadre d'une bicyclette (7), et un élément de tension (14) étant relié au corps de base (13) et formé de telle sorte que le cadre d'une bicyclette puisse être tendu entre l'élément de tension (14) et la surface de butée (15) du corps de base (13), l'élément de tension (14) étant en particulier formé comme une courroie de tension (14), qui est reliée au corps de base (13) par l'une de ses zones d'extrémité, de préférence de manière articulée, et qui présente dans sa zone d'extrémité libre une denture (17) au moyen de laquelle la courroie de tension (14) peut être encliquetée dans un mécanisme d'encliquetage (18) correspondant qui est fixé sur le corps de base (13) du dispositif de tension (12) et/ou le dispositif de tension (12) présente en outre un mécanisme de verrouillage qui est conçu de telle sorte qu'une ouverture involontaire de l'élément de tension (14) est empêchée, le mécanisme de verrouillage comprenant de préférence une serrure (19) pouvant être actionnée par une clé.

14. Dispositif (10) selon l'une des revendications précédentes, **caractérisé en ce que** le corps de base (11) est réalisé sous la forme d'un composant tubulaire et présente à son extrémité tournée vers le dispositif de tension (12) une face frontale de butée contre laquelle le dispositif de tension (12) vient en butée lorsque les éléments de serrage (21, 22) sont dans leur position de serrage.
